# EUROPEAN PATENT APPLICATION

(11) **EP 3 376 356 A1**
(43) Date of publication of application: **19.09.2018**
(21) Application number: 17178161.0
(22) Date of filing: 27.06.2017
(51) Int. Cl.: G06F 3/0488, G04G 21/04, G04G 21/08

(54) **COMMAND DEVICE AND MANUFACTURING METHOD THEREOF**

(30) Priority: 17.03.2017 TW 106109007
(71) Applicant: Princo Corp., Hsinchu 300 (TW)
(72) Inventor: Chiu, Pei-liang, 300 Hsinchu (TW)
(74) Representative: Petraz, Gilberto Luigi

(57) **Abstract**

A command device and a manufacturing method thereof are disclosed. The command device includes a top cover, a housing, a bottom cover, a transparent conductive film, and a functional module. The top cover, the housing, and the bottom cover are assembled to form a containing space from top to bottom. The transparent conductive film is formed on a lower surface of the top cover. The functional module includes a touch detection unit and a processor. The touch detection unit is configured to sense a signal change via the transparent conductive film. The signal change is generated by an action performed on the top cover. The processor is configured to output a corresponding command according to the signal change. The command device can prevent electromagnetic waves from being affected by the housing and be operated more easily.

## Description

### TECHNICAL FIELD OF THE INVENTION

The present disclosure relates to a command field, and more particularly to a command device and a manufacturing method thereof.

### BACKGROUND OF THE INVENTION

Currently, a wearable device which is manufactured as a command device that can communicate with an external device (e.g., a mobile phone) is developed. For example, it is increasingly common to manufacture a smart wristwatch by disposing a wireless antenna and a functional module in a wristwatch. A chip antenna, a helix or spiral antenna, a patch antenna, or a loop antenna is usually utilized in the conventional smart wristwatch for receiving and transmitting signals. The above-mentioned antennas are a type of electromagnetic antenna. That is, the above-mentioned antennas receive and transmit signals by an electromagnetic field.

The conventional smart wristwatch structure usually comprises a glass, a dial, a watch case, and a bottom cover. The dial, the watch case, and the bottom cover construct an accommodating space from top to bottom. The antenna is disposed in the accommodating space inside the smart wristwatch or in the watch case. However, the dial, the watch case, and the bottom cover of the conventional smart wristwatch are generally made of metal. The metal has the characteristics of shielding signals. Accordingly, the signals received or transmitted by the antenna disposed in the accommodating space or in the watch case of the conventional smart wristwatch are affected by the watch case, the bottom cover, and the dial which are made of metal.

Even if at least one of the dial, the watch case, and the bottom cover constructing the accommodating space is not made of metal or a part of at least one of the dial, the watch case, and the bottom cover is not made of metal, the antenna is still affected by the objects (the watch case, the bottom cover, and the dial) constructing the accommodating space, a movement, a functional module, or a battery in the accommodating space because the antenna is in the accommodating space or in the watch case. As a result, a wireless communication distance between the antenna and a mobile terminal is significantly reduced.

Furthermore, a conventional wristwatch does not comprise a touch screen and does not have an electronic knob (a button). Even if the conventional wristwatch is attached with various communicating and operating modules, only gesture recognition can operate the conventional wristwatch. There is no other way to operate the conventional wristwatch. A user might not be familiar with an action for operating the conventional wristwatch. For example, if the user rotates the conventional wristwatch three times, the wristwatch can control a mobile phone to generate a sound. However, the user might not be familiar with the correct action for rotating the conventional wristwatch, so that the conventional wristwatch cannot be operated correctly.

Consequently, there is a need to solve the above-mentioned problems in the prior art.

### SUMMARY OF THE INVENTION

An objective of the present disclosure is to provide a command device and a manufacturing method thereof which can solve the problems in the prior art.

The command device of the present disclosure comprises a top cover; a housing; a bottom cover, the top cover, the housing, and the bottom cover constructing an accommodating space from top to bottom; a transparent conductive film formed on a lower surface of the top cover, wherein after the transparent conductive film is formed on the surface of the top cover, a structure formed by the top cover and the transparent conductive film has a transmittance greater than 70%, and a combination of the top cover and the transparent conductive film does not display an image; and a functional module disposed in the accommodating space, the functional module comprising: a touch detection unit configured to sense a signal change via the transparent conductive film, wherein the signal change is generated by an action performed on the top cover or above the top cover; and a processor configured to receive the signal change and output a corresponding command according to the signal change.

The command device of the present disclosure comprises a top cover; a housing; a bottom cover, the top cover, the housing, and the bottom cover constructing an accommodating space from top to bottom; a transparent conductive film formed on a lower surface of the top cover, wherein after the transparent conductive film is formed on the surface of the top cover, a structure formed by the top cover and the transparent conductive film has a transmittance greater than 70%, and a combination of the top cover and the transparent conductive film does not display an image; and a functional module disposed in the accommodating space, the functional module comprising: a wireless communication unit configured to wirelessly communicate with a mobile terminal via the mobile terminal; a touch detection unit configured to sense a signal change via the transparent conductive film, wherein the signal change is generated by an action performed on the top cover or above the top cover; and a processor configured to receive the signal change and output a corresponding command according to the signal change.

The command device of the present disclosure comprises a transparent base material; a transparent conductive film formed on a surface of the transparent base material, wherein after the transparent conductive film is formed on the surface of the transparent base material, a structure formed by the transparent base material and the transparent conductive film has a transmittance greater than 70%, and a combination of the transparent base material and the transparent conductive film does not display an image; and a functional module electrically connected to the transparent conductive film, the functional module comprising: a touch detection unit configured to sense a signal change via the transparent conductive film, wherein the signal change is generated by an action performed on the transparent conductive film or above the transparent conductive film; and a processor configured to receive the signal change and output a corresponding command according to the signal change.

A manufacturing method of a command device of the present disclosure comprises providing a top cover, a housing, and a bottom cover, wherein the top cover, the housing, and the bottom cover construct an accommodating space from top to bottom; forming a transparent conductive film on a lower surface of the top cover, wherein after the transparent conductive film is formed on the surface of the top cover, a structure formed by the top cover and the transparent conductive film has a transmittance greater than 70%, and a combination of the top cover and the transparent conductive film does not display an image; and disposing a functional module in the accommodating space, the functional module comprising: a touch detection unit configured to sense a signal change via the transparent conductive film, wherein the signal change is generated by an action performed on the top cover or above the top cover; and a processor configured to receive the signal change and output a corresponding command according to the signal change.

A manufacturing method of a command device of the present disclosure comprises providing a transparent base material; forming a transparent conductive film on a surface of the transparent base material, wherein after the transparent conductive film is formed on the surface of the transparent base material, a structure formed by the transparent base material and the transparent conductive film has a transmittance greater than 70%, and a combination of the transparent base material and the transparent conductive film does not display an image; and electrically connecting a functional module to the transparent conductive film, the functional module comprising: a touch detection unit configured to sense a signal change via the transparent conductive film, wherein the signal change is generated by an action performed on the transparent base material or above the transparent base material; and a processor configured to receive the signal change and output a corresponding command according to the signal change.

In the command device of the present disclosure, the transparent conductive film can sense an action performed on the top cover or over the top cover. That is, the command device of the present disclosure can sense the action on the top cover or above the top cover even if a touch panel is not dispose in the command device. A user can operate the command device more easily. The command device may be a wristwatch, an electronic watch, glasses, and so on.

### BRIEF DESCRIPTION OF THE DRAWINGS

FIG. 1 shows a top view of a command device in accordance with an embodiment of the present disclosure.
FIG. 2 shows an exploded view of the command device shown in FIG. 1.
FIG. 3 shows a sectional view of the command device shown in FIG. 1.
FIG. 4 shows a wireless communication between a controlling unit and a mobile terminal in accordance with the present disclosure.
FIG. 5 shows that a transparent conductive film is adhered to a top cover in accordance with an embodiment of the present disclosure.
FIG. 6 shows an enlarged view of an area A in FIG. 5.
FIG. 7 shows a command device in accordance with another embodiment of the present disclosure.
FIG. 8 shows a schematic flowchart of a manufacturing method of a command device in accordance with an embodiment of the present disclosure.
FIG. 9 shows a schematic flowchart of a manufacturing method of a command device in accordance with another embodiment of the present disclosure.

### DETAILED DESCRIPTION OF THE INVENTION

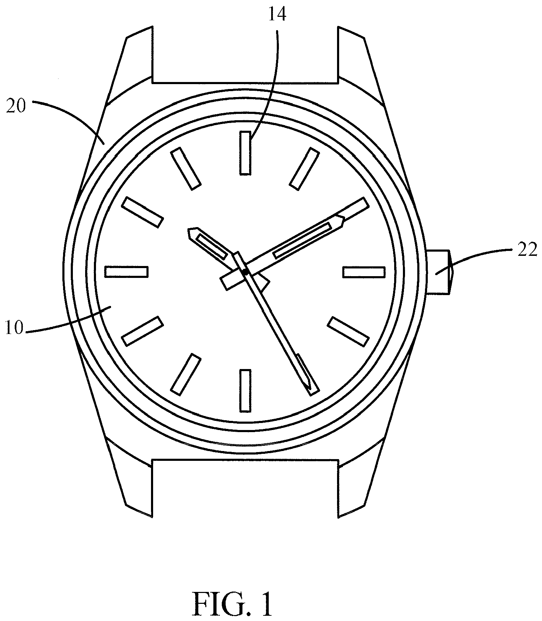

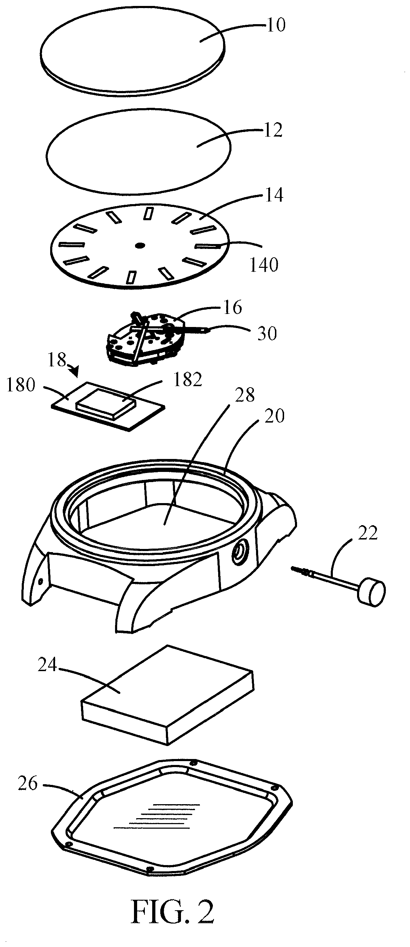

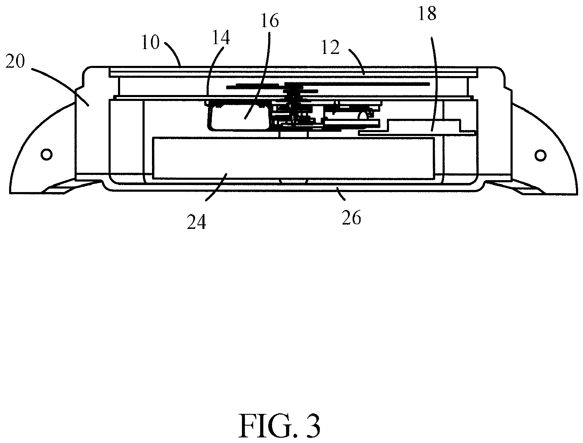

The present disclosure is a command device comprising a short distance communication module disposed therein. The command device may be but not limited to a wristwatch. Please refer to FIG. 1 to FIG. 3. FIG. 1 shows a top view of a command device in accordance with an embodiment of the present disclosure. FIG. 2 shows an exploded view of the command device shown in FIG. 1. FIG. 3 shows a sectional view of the command device shown in FIG. 1.

The command device comprises a top cover 10, a transparent conductive film 12, a time display element 14, a movement 16, a functional module 18, a housing 20, a crown 22, a battery 24, and a bottom cover 26.

The top cover 10, the housing 20, and the bottom cover 26 construct an accommodating space 28 from top to bottom. The top cover 10, the housing 20, and the bottom cover 26 are configured to protect mechanical structures and/or electronic devices inside the command device.

Preferably, the top cover 10 is a transparent material (e.g., a glass). The transparent conductive film 12 is formed on and adhered to a lower surface of the top cover 10. It is noted that the transparent conductive film 12 has a short distance communication function. Preferably, the transparent conductive film 12 has a high light transmittance structure. After the transparent conductive film 12 is formed on the lower surface of the top cover 10, a structure formed by the top cover 10 and the transparent conductive film 12 still has a transmittance greater than 70%. Accordingly, when a user checks the time through the top cover 10, the user is not affected by the transparent conductive film 12.

In the present embodiment, the time display element 14 is disposed in the accommodating space 28 and positioned on the functional module 18. The time display element 14 includes physical scales 140 (e.g., one o'clock to twelve o'clock) and at least one indicator 30 (e.g., physical hands including an hour hand, a minute hand, and a second hand) disposed on the physical scales 140. The at least one indicator 30 is driven by the movement 16 and cooperates with the physical scales 140 of the time display element 14 to show the time. Through the transparent top cover 10 and the transparent conductive film 12, the user can perceive the position information (i.e., time information) indicated by the at least one indicator 140.

It is noted that in the present embodiment, the command device is a watch including the at least one indicator 180, and the time display element 18 is a dial. In another embodiment, the communication device is a digital watch, and the time display element 14 is a display which displays time in digits.

The crown 22 is disposed at the lateral side of the command device. The user can adjust the correct time or set an alarm by turning a knob on the crown 22.

The battery 24 can provide the power required by the movement 16 and/or the functional module 18. The battery 24 may be a primary battery or a secondary battery.

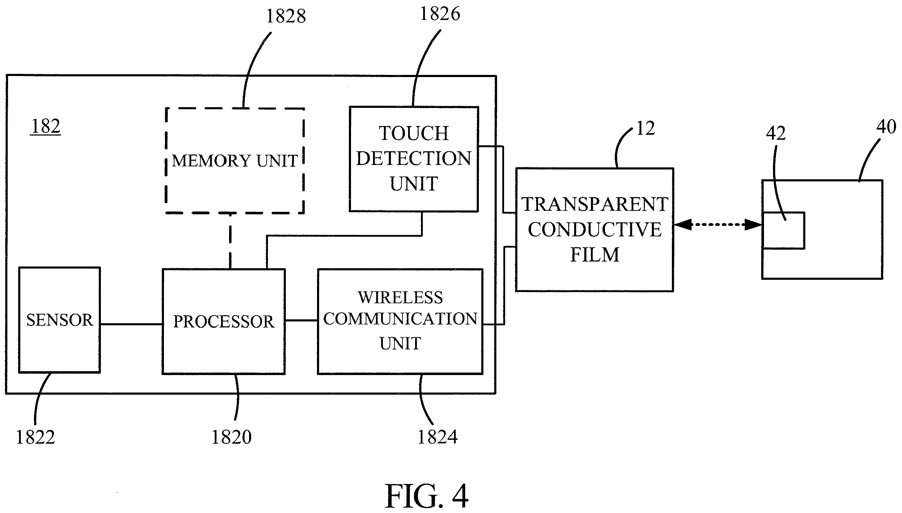

The functional module 18 is disposed in the accommodating space 28. As shown in FIG. 2, the functional module 18 comprises an electrical connection substrate 180 and a controlling unit 182 disposed on the electrical connection substrate 180. Please refer to FIG. 4. FIG. 4 shows a wireless communication between the controlling unit 182 and a mobile terminal 40 in accordance with the present disclosure. The controlling unit 182 of the present disclosure comprises a processor 1820, a sensor 1822, a wireless communication unit 1824, and a touch detection unit 1826.

The wireless communication unit 1824 is electrically connected to the processor 1820 and configured to wirelessly communicate with the mobile terminal via the mobile terminal 40. The mobile terminal 40 has a wireless signal transceiver 42 for receiving and transmitting wireless signals. For example, the wireless signal transceiver 42 may be BLUETOOTH transceiver or a near field communication (NFC) transceiver. It is noted that when the command device is a wristwatch structure, the functional module 18 can also be deployed on a watch strap of the wristwatch structure.

The functional module 18 may also comprise a memory unit 1828. The memory unit 1828 is configured to store the data required by the processor 1820. Also, the memory unit 1828 can be integrated into the processor 1820.

A feature of the present disclosure is that the touch detection unit 1826 is electrically connected to the transparent conductive film 12 and the processor 1820. When the user performs an action on or above the top cover 10 in FIG. 2 (e.g., clicks the top cover 10 or slides on the top cover 10), the touch detection unit is configured to sense a signal change (e.g., a current change) via the transparent conductive film 12. The signal change is generated by the action performed on or above the top cover 10. The processor is configured to receive the signal change and output a corresponding command according to the signal change.

For example, when the user clicks the top cover 10 in FIG. 2 one time, the touch detection unit 1826 senses a signal change (e.g., a current change) and transmits the signal change to the processor 1820. The processor 1820 controls the command device to be switched from a sleep mode to a normal operating mode. In the sleep mode, the wireless communication unit 1824 of the command device is turned off for the purpose of power saving, and thus the wireless communication device cannot communicate with the mobile terminal 40. In the normal operating mode, the wireless communication unit 1824 of the command device is turned on, and thus the wireless communication device can communicate with the mobile terminal 40.

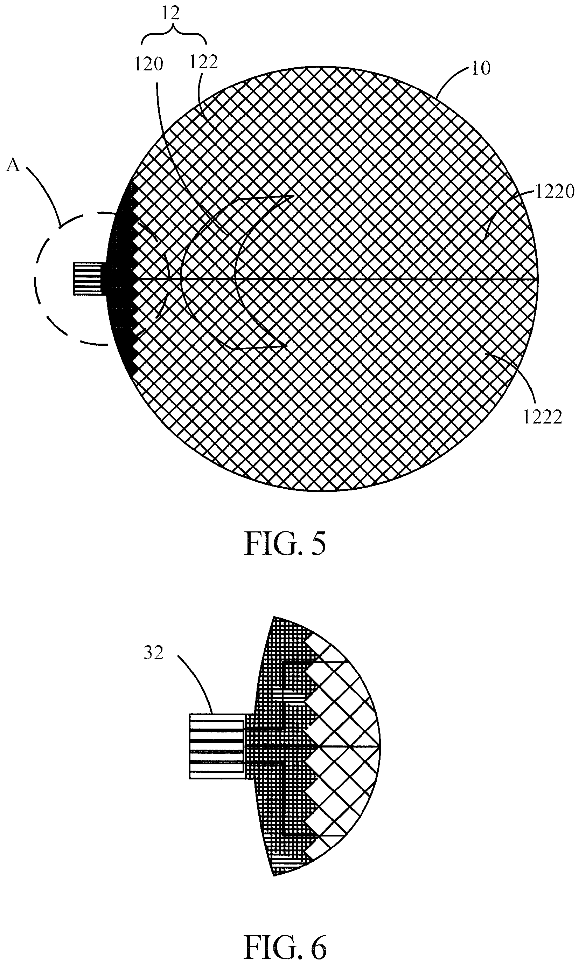

Please refer to FIG. 5 and FIG. 6. FIG. 5 shows that the transparent conductive film 12 is adhered to the top cover 10 in accordance with an embodiment of the present disclosure. FIG. 6 shows an enlarged view of an area A in FIG. 5.

As shown in FIG. 5, the transparent conductive film 12 is a conductive film formed in a mesh shape. In practice, the mesh shape is formed by a plurality of ultra-fine metal lines. Accordingly, the user does not see the transparent conductive film 12 in the mesh shape. The transparent conductive film 12 which the user sees is approximately transparent.

The transparent conductive film 12 may comprise a communication part 120 and a sensing part 122. The communication part 120 is formed on and adhered to a part of the lower surface of the top cover 10. The sensing part 122 is formed on and adhered to a remaining part of the lower surface of the top cover 10. The communication part 120 and the sensing part 122 are electrically disconnected from each other. The communication part 120 is electrically connected between the wireless communication unit 1824 and the mobile terminal 40 and configured to transmit and receive signals between the wireless communication unit 1824 and the mobile terminal 40. The sensing part 122 is electrically connected to the touch detection unit 1826 and configured to transmit the signal change (e.g., the current change) to the touch detection unit 1826 in FIG. 4 via a signal transmitting part 32. The communication part 120 of the transparent conductive film 12 is a short distance communication antenna.

A method for manufacturing the communication part 120 and the sensing part 122 is to form a complete conductive film on the lower surface of the top cover 10 firstly. Then, the complete conductive film is split into the communication part 120 and the sensing part 122 by laser patterning. A slit is formed between the communication part 120 and the sensing part 122. The communication part 120 and the sensing part 122 are not affected by each other.

In the embodiment of FIG. 5, the sensing part is split into a first area 1220 and a second area 1222. The first area 1220 and the second area 1222 are electrically disconnected from each other. When the user slides from the first area 1220 to the second area 1222, the sensing part 122 in the first area 1220 can transmit a signal change to the touch detection unit 1826, and the sensing part in the second area 1222 can transmit a signal change to the touch detection unit 1826. The processor 1820 analyzes the two signal changes and outputs a corresponding command according to the signal changes. For example, the processor 1820 controls the command device from a standby mode to a normal operating mode. Alternatively, the processor 1820 performs a specific controlling command. For example, the user touches the top cover 10 for two seconds), the processor 1820 outputs a corresponding command to the wireless communication unit 1824 and the wireless communication unit 1824 controls the mobile terminal 40 to dial a phone via the communication part 120.

In another embodiment, the sensing part 122 is not split into the two areas, and the sensing part 122 comprises only one area. In yet another embodiment, the sensing part 122 may be split into a plurality of areas which are electrically disconnected from each other or one another.

It is noted that a combination of the top cover 10 and the transparent conductive film 12 does not display an image. Specifically, an operation principle of the command device of the present disclosure is different from that of a liquid crystal display device or a touch device.

It is noted that the command device in FIG. 1 is a wristwatch structure. In another embodiment, the command device may comprise only the top cover 10, the transparent conductive film 12, the functional module 18, the housing 20, and the bottom cover 26. That is, the command device has a command function (an input function) but does not have a time display function. In yet another embodiment, the functional module 18 of the command device may exclude the wireless communication unit 1824. That is, the command device has only a command function (an input function) but does not have a communication function and a time display function.

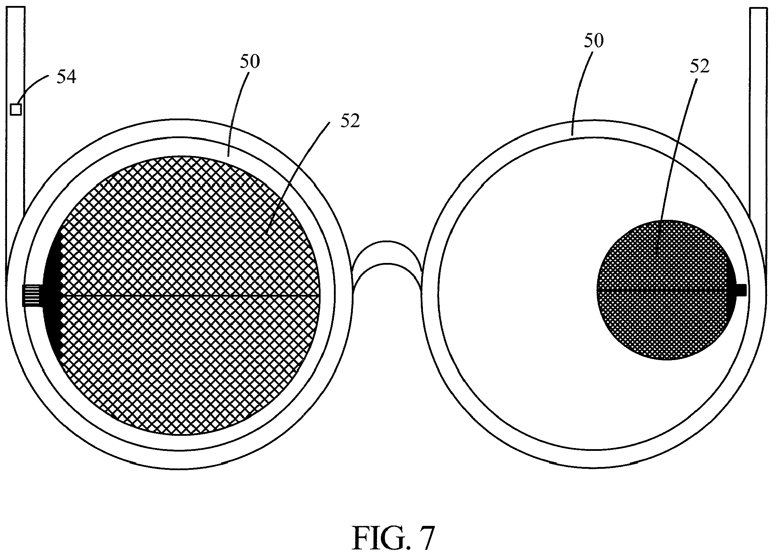

Please refer to FIG. 7. FIG. 7 shows a command device in accordance with another embodiment of the present disclosure.

In the present embodiment, the command device is a pair of glasses. The command device comprises a transparent base material 50 and a transparent conductive film 52. The transparent conductive film 52 is formed on a surface of the transparent base material 50. After the transparent conductive film 52 is formed on the surface of the transparent base material 50, a structure formed by the transparent base material 50 and the transparent conductive film 52 has a transmittance greater than 70%. A combination of the transparent base material 50 and the transparent conductive film 52 does not display an image.

In one embodiment, the transparent conductive film 52 may comprise only one area. In another embodiment, the transparent conductive film 52 may be split into a plurality of areas which are electrically disconnected from each other or one another, and sizes of the areas may be same or different.

Please refer to FIG. 2, FIG. 4, and FIG. 7. The functional module 18 is electrically connected to the transparent conductive film 52. The functional module 18 at least comprises the touch detection unit 1826, the processor 1820, and the wireless communication unit 1824. Specifically, the functional module 18 is electrically connected to the transparent conductive film 52 in a wireless communication manner.

The touch detection unit 1826 is configured to sense a signal change via the transparent conductive film 52. The signal change is generated by an action performed on or above the transparent base material 50. The signal change sensed by the transparent conductive film 52 is transmitted to the processor 1820 of the functional module 18 via a wireless signal transceiver 54. The processor is configured to receive the signal change and output a corresponding command according to the signal change.

It is noted that in the embodiment of FIG. 7, the transparent conductive film 52 is disposed on two lenses of the glasses. In another embodiment, the transparent conductive film 52 may be formed on only of the two lenses of the glasses. In yet another embodiment, the transparent conductive film 52 may be formed on a large area of the transparent base material 50 (the left lens) or may be formed on a small area of the transparent base material 50 (the right lens).

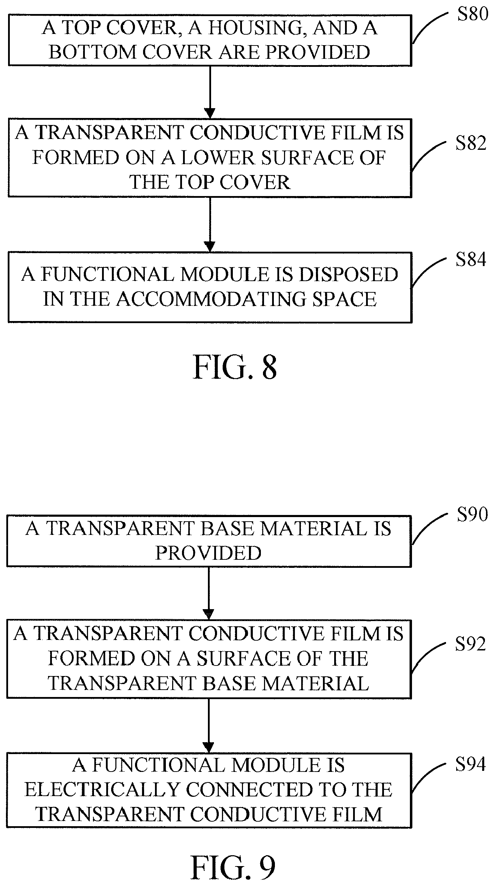

Please refer to FIG. 8. FIG. 8 shows a schematic flowchart of a manufacturing method of a command device in accordance with an embodiment of the present disclosure.

In step S80, a top cover, a housing, and a bottom cover are provided. The top cover, the housing, and the bottom cover construct an accommodating space from top to bottom.

In step S82, a transparent conductive film is formed on a lower surface of the top cover. After the transparent conductive film is formed on the surface of the top cover, a structure formed by the top cover and the transparent conductive film has a transmittance greater than 70%. A combination of the top cover and the transparent conductive film does not display an image.

In step S84, a functional module is disposed in the accommodating space. The functional module comprises a touch detection unit and a processor. The touch detection unit is configured to sense a signal change via the transparent conductive film. The signal change is generated by an action performed on the top cover or above the top cover. The processor is configured to receive the signal change and output a corresponding command according to the signal change.

Please refer to FIG. 9. FIG. 9 shows a schematic flowchart of a manufacturing method of a command device in accordance with another embodiment of the present disclosure.

In step S90, a transparent base material is provided.

In step S92, a transparent conductive film is formed on a surface of the transparent base material. After the transparent conductive film is formed on the surface of the transparent base material, a structure formed by the transparent base material and the transparent conductive film has a transmittance greater than 70%. A combination of the transparent base material and the transparent conductive film does not display an image.

In step S94, a functional module is electrically connected to the transparent conductive film. The functional module comprises a touch detection unit and a processor. The touch detection unit is configured to sense a signal change via the transparent conductive film. The signal change is generated by an action performed on the transparent base material or above the transparent base material. The processor is configured to receive the signal change and output a corresponding command according to the signal change.

In the command device of the present disclosure, the transparent conductive film is formed on the lower surface of the top cover instead of being formed in the accommodating space or inside the housing, and the transparent conductive film may has an antenna function. As a result, when the transparent conductive film transmits or receives signals, the signals are not shielded or affected by the housing. Furthermore, the transparent conductive film of the present disclosure not only can transmit or receive the signals between the command device and an external device, but also can sense an action performed on the top cover. That is, the command device of the present disclosure can sense the action on or above the top cover even if a touch panel is not dispose in the command device. The user can operate the command device more easily.

While the preferred embodiments of the present disclosure have been illustrated and described in detail, various modifications and alterations can be made by persons skilled in this art. The embodiment of the present disclosure is therefore described in an illustrative but not restrictive sense. It is intended that the present disclosure should not be limited to the particular forms as illustrated, and that all modifications and alterations which maintain the realm of the present disclosure are within the scope as defined in the appended claims.

## Claims

1. A command device, comprising:
a top cover (10);
a housing (20);
a bottom cover (26), the top cover (10), the housing (20), and the bottom cover (26) constructing an accommodating space (28) from top to bottom;
a transparent conductive film (12) formed on a lower surface of the top cover (10), wherein after the transparent conductive film is formed on the surface of the top cover (10), a structure formed by the top cover (10) and the transparent conductive film (12) has a transmittance greater than 70%, and a combination of the top cover (10) and the transparent conductive film (12) does not display an image; and
a functional module (18) disposed in the accommodating space (28), the functional module (18) comprising:
a touch detection unit (1826) configured to sense a signal change via the transparent conductive film (12), wherein the signal change is generated by an action performed on the top cover (10) or above the top cover (10); and
a processor (1820) configured to receive the signal change and output a corresponding command according to the signal change.

2. The command device according to claim 1, further comprising:
a time display element (14) disposed in the accommodating space (28).

3. The command device according to claim 1, wherein the transparent conductive film (12) is split into a plurality of areas which are electrically disconnected from each other or one another.

4. A command device, comprising:
a top cover (10);
a housing (20);
a bottom cover (26), the top cover (10), the housing (20), and the bottom cover (26) constructing an accommodating space (28) from top to bottom;
a transparent conductive film (12) formed on a lower surface of the top cover (10), wherein after the transparent conductive film (12) is formed on the surface of the top cover (10), a structure formed by the top cover (10) and the transparent conductive film (12) has a transmittance greater than 70%, and a combination of the top cover (10) and the transparent conductive film (12) does not display an image; and
a functional module (18) disposed in the accommodating space (28), the functional module (18) comprising:
a wireless communication unit (1824) configured to wirelessly communicate with a mobile terminal (40) via the transparent conductive film (12);
a touch detection unit (1826) configured to sense a signal change via the transparent conductive film (12), wherein the signal change is generated by an action performed on the top cover (10) or above the top cover (10); and
a processor (1820) configured to receive the signal change and output a corresponding command according to the signal change.

5. The command device according to claim 4, wherein the transparent conductive film (12) comprises:
a communication part (120) formed on a part of the lower surface of the top cover (10); and
a sensing part (122) formed on a remaining part of the lower surface of the top cover (10),
wherein a slit is formed between the sensing part (122) and the communication part (120).

6. The command device according to claim 5, wherein the sensing part (122) of the transparent conductive film (12) is split into a plurality of areas which are electrically disconnected from each other or one another.

7. The command device according to claim 5, wherein the communication part (120) of the transparent conductive film (12) is a short distance communication antenna.

8. The command device according to claim 4, further comprising:
a time display element (14) disposed in the accommodating space (28).

9. The command device according to claim 8, wherein the time display element (14) includes physical scales (140) and at least one indicator (30) disposed on the physical scales (140).

10. The command device according to claim 8, wherein the time display element (14) is a display which displays time in digits.

11. A command device, comprising:
a transparent base material (50);
a transparent conductive film (52) formed on a surface of the transparent base material (50), wherein after the transparent conductive film (52) is formed on the surface of the transparent base material (50), a structure formed by the transparent base material (50) and the transparent conductive film (52) has a transmittance greater than 70%, and a combination of the transparent base material (50) and the transparent conductive film (52) does not display an image; and
a functional module (18) electrically connected to the transparent conductive film (52), the functional module (18) comprising:
a touch detection unit (1826) configured to sense a signal change via the transparent conductive film (52), wherein the signal change is generated by an action performed on the transparent base material (50) or above the transparent base material (50); and
a processor (1820) configured to receive the signal change and output a corresponding command according to the signal change.

12. The command device according to claim 11, wherein the transparent conductive film (52) is split into a plurality of areas which are electrically disconnected from each other or one another.

13. A manufacturing method of a command device, comprising:
providing a top cover (10), a housing (20), and a bottom cover (26), wherein the top cover (10), the housing (20), and the bottom cover (26) construct an accommodating space (28) from top to bottom;
forming a transparent conductive film (12) on a lower surface of the top cover (10), wherein after the transparent conductive film (12) is formed on the surface of the top cover (10), a structure formed by the top cover (10) and the transparent conductive film (12) has a transmittance greater than 70%, and a combination of the top cover (10) and the transparent conductive film (12) does not display an image; and
disposing a functional module (18) in the accommodating space (28), the functional module (18) comprising:
a touch detection unit (1826) configured to sense a signal change via the transparent conductive film (12), wherein the signal change is generated by an action performed on the top cover (10) or above the top cover (10); and
a processor (1820) configured to receive the signal change and output a corresponding command according to the signal change.

14. A manufacturing method of a command device, comprising:
providing a transparent base material (50);
forming a transparent conductive film (52) on a surface of the transparent base material (50), wherein after the transparent conductive film (52) is formed on the surface of the transparent base material (50), a structure formed by the transparent base material (50) and the transparent conductive film (52) has a transmittance greater than 70%, and a combination of the transparent base material (50) and the transparent conductive film (52) does not display an image; and
electrically connecting a functional module (18) to the transparent conductive film (52), the functional module comprising:
a touch detection unit (1826) configured to sense a signal change via the transparent conductive film (52), wherein the signal change is generated by an action performed on the transparent base material (50) or above the transparent base material (50); and
a processor (1820) configured to receive the signal change and output a corresponding command according to the signal change.
